# EUROPÄISCHE PATENTSCHRIFT

(11) **EP 0 656 225 B1**
(45) Veröffentlichungstag und Bekanntmachung des Hinweises auf die Patenterteilung: **21.01.1998**
(21) Anmeldenummer: 94113402.5
(22) Anmeldetag: 26.08.1994
(51) Int. Cl.: B01D 46/24, B01D 27/06, B01D 29/11

(54) **Filterpatrone**
Filter cartridge
Cartouche filtrante

(30) Priorität: 28.10.1993 DE 4336870
(43) Veröffentlichungstag der Anmeldung: 07.06.1995
(73) Patentinhaber: W.L. GORE & ASSOCIATES, 85640 Putzbrunn (DE)
(72) Erfinder: Jander, Wolfgang, D-81677 München (DE)
(74) Vertreter: Klunker . Schmitt-Nilson . Hirsch

(56) Entgegenhaltungen:
- EP-A- 0 206 182
- DE-U- 9 108 022

## Beschreibung

Die Erfindung betrifft eine Filterpatrone zur Staubabscheidung gemäß dem Oberbegriff des Anspruchs 1. Eine derartige Filterpatrone ist aus der DE-U-91 08 022 bekannt.

Für die Zwecke der Industrie-Entstaubung werden in letzter Zeit Filterpatronen eingesetzt. Grund für diese Maßnahme ist insbesondere die im Vergleich zu bekannten Schlauchfiltern bei gleichem Bauvolumen der Filteranlagen größere Filterfläche, die zu einer Herabsetzung der Filterflächenbelastung führt oder aber eine kompaktere Bauweise ermöglicht.

Außer für den Einsatz bei der Industrie-Entstaubung werden die bekannten Filterpatronen auch zur Wiedergewinnung von Stäuben aus den verschiedensten verfahrenstechnischen Prozessen, beispielseise zur Wiedergewinnung pharmazeutischer Stäube eingesetzt.

Eine weitere Anwendungsmöglichkeit für Filterpatronen besteht in der Rückgewinnung von Stäuben aus elektrostatischen Pulverbeschichtungsanlagen. Im Falle dieses Einsatzes entscheidet die Rückgewinnung der in den Beschichtungskabinen verwendeten Pulverlacke mit über die Wirtschaftlichkeit des gesamten Beschichtungsverfahrens.

Weitere Einsatzgebiete für Filterpatronen sind die Wirbelschichttrockner, in denen Stäube durch Verwirbelung getrocknet werden, sowie Wirbelschichtgranulatoren, in denen Stäube mittels Verwirbelung zu Granulaten zusammengefügt werden.

Da auf einer Filteranlage der erläuterten Art nicht immer ein und dasselbe Material verarbeitet wird, kommt dem Problem der Abreinigbarkeit der Filterpatronen eine erhöhte Bedeutung zu, insbesondere in Bereichen der Lebensmittel- und Pharmaindustrie.

Bei bekannten Filterpatronen wird das Filtermedium bzw. der aus diesem gebildete Faltenbalg an den beiden Abschlußteilen, d.h. im Bereich des Bodens und des Deckels des Patronenkörpers, üblicherweise durch ein Gießharz fixiert und abgedichtet.

Das untere Abschlußteil des Patronenkörpers ist beispielsweise ein rundes napfförmiges Preßteil, dessen Außendurchmesser dem Außendurchmesser des Faltenbalges entspricht. Beim Abreinigen mittels Rotationsdüsen oder durch einen reversierbaren Luftstrom fällt der Staubkuchen von den frei an einer Montageplatte der Entstaubungsanlage hängenden Filterpatronen ab, wodurch der Druckverlust im Filtermedium wieder auf den Sollwert abnimmt.

Bedingt durch die Faltengeometrie lassen sich Filterpatronen im Vergleich zu Filterschläuchen weniger gut abreinigen. Es läßt sich infolgedessen nie ganz ausschließen, daß noch Reststäube der alten Charge an den Patronen verbleiben. Dies hat weiterhin zur Folge, daß die Filterpatronen häufig ausgewechselt und der Anlagenbetreiber einen entsprechenden Reservebestand an derartigen Patronen vorrätig halten muß.

Bei einer derartigen Filterpatrone beispielsweise weist deren Boden, d.h. das untere Abschlußteil, eine umlaufende Rinne auf, in welche das untere Ende des Faltenbalges eingesetzt und dort mittels eines Gießharzes fixiert und abgedichtet wird. Mit ihrem oberen Abschußteil wird die Filterpatrone an einem Montageboden befestigt, wobei die Abdichtung zum Montageboden hin über eine Kunststoffdichtung, z.B. Silikondichtung erfolgt. Die Filterpatrone wird während des Betriebes von außen nach innen durchströmt, d.h., die Rohgasseite ist außerhalb der Filterpatrone und der Reingasraum steht über die Auslaßöffnung mit dem Inneren der Filterpatrone in Verbindung. Im Betrieb lagert sich der Staubkuchen auf der Oberfläche des Filtermediums ab. Nach Aufbau einer entsprechenden Dicke wird die Patrone abgereinigt, wobei der Staubkuchen nach unten Fällt und die Reststäube in den toten Ecken der Filterpatrone liegen bleiben, welche durch die dortigen Enden des Faltenbalges zusammen mit dem unteren Abschlußteil gebildet werden. Eine vollständige Entfernung dieser Reststäube ist im normalen Abreinigungsbetrieb nicht möglich. Mit anderen Worten, die Abreinigbarkeit einer derartigen Filterpatrone ist in der Praxis nicht zufriedenstellend.

Darüber hinaus ist aus der DE-U-91 13 531 eine Filterpatrone bekannt, bei welcher das untere Abschlußteil, also der Boden der Filterpatrone, einen Umriß aufweist, welcher der Unteransicht des zylinderförmig angeordneten Faltenbalges entspricht. Somit hat der Boden dieser Filterpatrone einen gezackten, sternförmigen Umriß, wobei die sternförmige Kontur dem Faltenverlauf des Faltenbalges entspricht. Diese Konstruktionsweise hat zur Folge, daß die sogenannten "toten Ecken", wie oben erläutert, vollständig vermieden werden, so daß beim Abreinigen mittels Rotationsdüsen oder auch beim Abwaschen der Staubkuchen frei und ungehindert nach unten abfallen kann, mit der Konsequenz, daß eine Ablagerung von Reststäuben in den Ecken zwischen Boden und Patronenwand nicht möglich ist. Wie es sich jedoch in der Praxis herausgestellt hat, ist auch diese bekannte Filterpatrone noch nicht dazu geeignet, den erhöhten Anforderungen hinsichtlich ihrer Abreinigbarkeit gerecht zu werden. Es können sich, bedingt durch die im unteren Endbereich des Faltenbalges vorhandenen Faltenkonturen, immer noch Rest-Staubablagerungen an den Außenflächen dieser im Querschnitt zackenförmigen Konturen der Falten bilden, derart, daß diese Staubablagerungen beim Abwaschen nicht vollständig entfernt werden können.

Darüber hinaus ist festgestellt worden, daß während des Abreinigungsvorganges bei den bekannten Filterpatronen das Reinigungswasser durch das Filtermaterial in das Innere der Patrone eindringen kann und dort nur mit erheblichem Aufwand wieder entfernt werden kann, beispielsweise mittels Absaugens. Wie Versuche gezeigt haben, steht im Patroneninneren das eingedrungene Wasser oft mehrere Zentimeter hoch. Solche Wassermengen können nicht mehr in einer akzeptablen Zeit verdampft werden, ohne die Stillstandszeiten der Anlagen unwirtschaftlich zu machen.

Der Grund, warum das Waschwasser eindringt, aber nicht mehr hinaus kann, ist der Druck, der beim Waschen verwendet wird. Dieser drückt das Wasser durch die Membran hindurch. Auf der Innenseite ist dann ein Druckabfall. Hinzu kommt noch, daß das Waschwasser Tenside enthält, die die Membrane hydrophil machen.

Hinzu kommt, daß sich während der Filtration Produktreste auf der äußeren Oberfläche des unteren Bodenteiles der Filterpatrone ablagern können, wobei sich derartige Produktreste nicht mit dem Waschwasser, welches für die Falten des Faltenbalges bestimmt ist, wieder entfernen lassen. Dies hat zur Folge, daß zusätzlich Wasser zur Reinigung der Patronenunterseite aufgewendet werden muß, was die Entsorgungsmenge und -kosten erhöht. Desweiteren muß für die Waschvorrichtung eine zusätzliche Möglichkeit geschaffen werden, um den Filterpatronen-Boden zu erfassen, was natürlich einen zusätzlichen konstruktiven Aufwand erfordert.

Im übrigen muß es aufgrund der gestiegenen Abfallbeseitigungskosten angestrebt werden, eine wiederverwendbare Filterpatrone zur Verfügung zu haben.

Mit Rücksicht auf die im vorangehenden geschilderten Gegebenheiten, insbesondere mit Rücksicht auf die erhöhten Anforderungen hinsichtlich der Reinigungs- und Abwaschfähigkeit von Filterpatronen, liegt der vorliegenden Erfindung die Aufgabe zugrunde, die Ausbildung einer verbesserten Filterpatrone anzugeben, welche außerordentlich gute Abreinigungsfähigkeiten sowohl im inneren als auch im äußeren Bereich des Patronenkörpers aufweist und bei welcher insbesondere das "Stehen von Wasser" im Inneren der Filterpatrone vermieden wird.

Diese Aufgabe wird, ausgehend von einer Filterpatrone der eingangs definierten Art, durch die Merkmale des Anspruchs 1 gelöst.

Wie sich gezeigt hat, läßt sich im Bereich dieses Stege-Kranzes des Faltenbalges etwa noch anhaftender Staub im Zuge des Abreinigungsvorganges mit Hilfe des abfließenden Waschwassers vollständig entfernen, d.h. gleichsam rückstandslos.

Weitere vorteilhafte konstruktive Ausgestaltungen der erfindungsgemäßen Filterpatrone ergeben sich aus den Unteransprüchen.

Gemäß der Erfindung ist das untere Abschlußteil zumindest teilweise kegelförmig ausgebildet, wobei es sich in einer von dem Patronenkörper der Filterpatrone ausgehenden Richtung verjüngt. Eine derartige kegelförmige Ausgestaltung des unteren Abschlußteiles führt zu dem Vorteil, daß während des Reinigungsvorganges die Waschflüssigkeit sehr gut auf dieser Kegeloberfläche nach unten abfließen kann, mit der Folge, daß auch diese Oberfläche sehr gut gereinigt wird. Es ist hierbei selbstverständlich darauf zu achten, daß der Kegelwinkel des kegelförmigen unteren Abschlußteiles so gewählt wird, daß die Reinigungsflüssigkeit sich nicht von dieser Oberfläche ablöst oder abtropft, bevor sie ihre Reinigungsaufgabe vollständig gelöst und die untere Kegelspitze erreicht hat.

Darüberhinaus kann es von Vorteil sein, wenn im Bereich der Kegelspitze des unteren Abschlußteiles ein Ventil angeordnet ist, welches es ermöglicht, daß die durch das Filtermaterial in den Innenraum des Patronenkörpers eingedrungene Waschflüssigkeit wieder nach außen ablaufen kann.

Wie bereits erwähnt, weist das untere Abschlußteil des Patronenkörpers eine im wesentlichen kegelförmige Gestalt auf, es besitzt jedoch in der Axialrichtung nach oben einen kurzen zylindrischen Teilabschnitt, der in die untere Öffnung des Patronenkörpers hineinragt und der dazu dient, sowohl das untere Ende des Faltenbalges mit dem unteren Abschlußteil zu fixieren und abzudichten als auch dazu, das untere Ende des Stützgitters mit dem unteren Abschlußteil fest zu verbinden. Das im wesentlichen zylindrische Stützgitter weist einen kleineren Durchmesser als der axiale Teilabschnitt des unteren Abschlußteils auf, so daß das Stützgitter in den Bereich des Innenumfanges des unteren Abschlußteiles, genauer gesagt, in den Bereich des Innenumfanges dessen kurzen zylindrischen Teilabschnittes eingeführt und mit diesem dort befestigt werden kann. Eine derartige Befestigung kann insbesondere mittels Vernieten oder Verschweißen erfolgen. Vorzugsweise liegt dieser Verbindungsbereich zwischen dem unteren Ende des Stützgitters und dem Innenumfang des unteren Abschlußteiles innerhalb der Vergußmasse, die gleichzeitig eine mechanische Verbindung zwischen dem Stützgitter und dem unteren Ende des Faltenbalges im Bereich dessen Stege-Kranzes bildet.

Das obere Ende des Faltenbalges ist in dem oberen Abschlußteil des Patronenkörpers in an sich bekannter Weise mittels Vergußmasse fixiert und abgedichtet.

Im folgenden wird die vorliegende Erfindung im Rahmen eines Ausführungsbeispieles näher erläutert, wobei auf die beigefügten Zeichnungen Bezug genommen wird. Darin zeigen:
- **Fig. 1**: eine Axial-Schnittansicht durch eine Filterpatrone;
- **Fig. 2**: eine Schnittansicht gemäß der Linie A-A nach Fig. 1;
- **Fig. 3**: eine Schnittansicht gemäß der Linie B-B nach Fig. 1;
- **Fig. 4**: eine schematische, perspektivische Teilansicht eines das Filtermedium bildenden Faltenbalges; und
- **Fig. 5**: eine schematische Schnittansicht eines Wirbelschichtgranulators, in welchem eine Anzahl von Filterpatronen angeordnet ist.

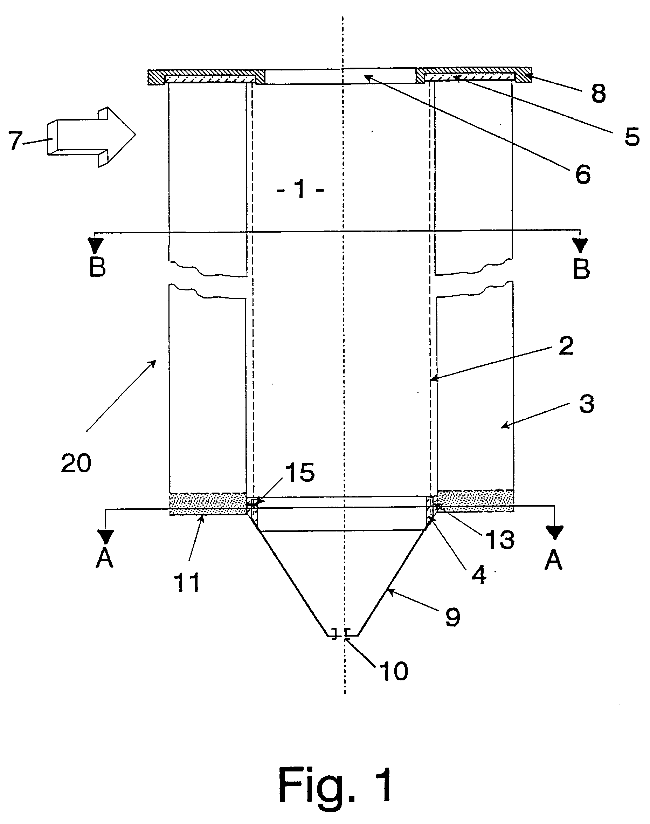

Gemäß Fig. 1 ist die zur Staubabscheidung dienende Filterpatrone allgemein mit der Bezugsziffer 20 bezeichnet. Diese Filterpatrone 20 setzt sich im wesentlichen aus einem Patronenkörper 1 und einem Filtermedium in der Form eines plissierten Faltenbalges 3 zusammen. Der Patronenkörper 1 seinerseits besteht im wesentlichen aus einem Stützgitter 2, einem unteren geschlossenen Abschlußteil 9 sowie einem oberen Abschlußteil 8, in welchem eine zentrale Auslaßöffnung 6 vorgesehen ist.

Das zylindrische, durchbrochene Stützgitter 2, das untere Abschlußteil 9 und das obere Abschlußteil 8 sind mit Hilfe mechanischer Befestigungsmittel miteinander verbunden, beispielsweise durch gegenseitiges Vernieten oder Verschweißen, wodurch ein Patronenkörper 1 gebildet wird, welcher der resultierenden Filterpatrone 20 die erforderliche Stabilität verleiht.

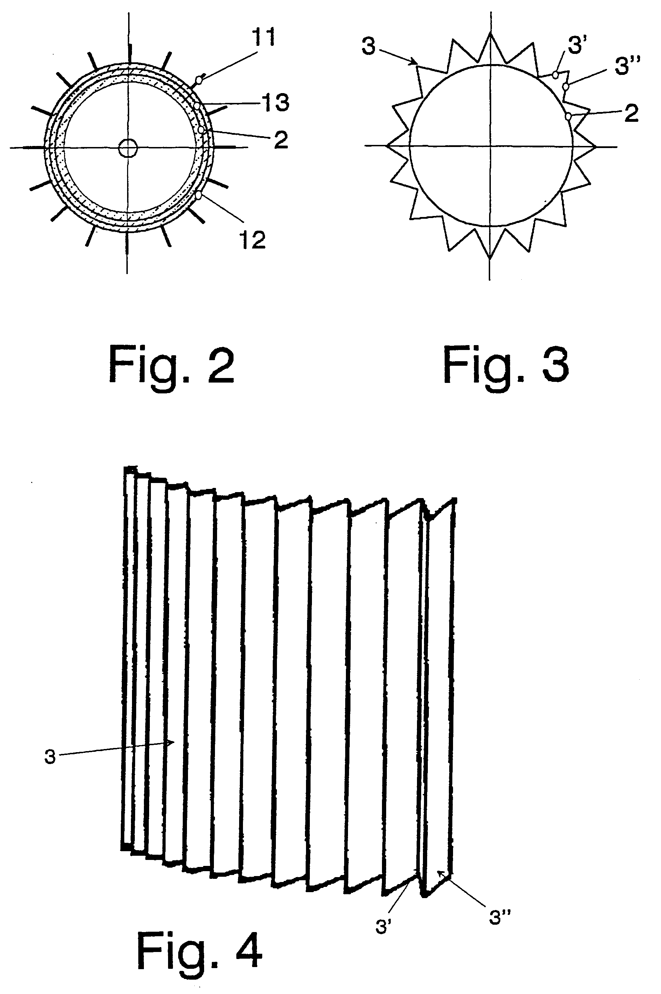

Der plissierte Faltenbalg 3 (vgl. auch Fig. 4) ist ebenfalls in der Form eines Zylinders angeordnet, welcher das Stützgitter 2 umgibt. Hierbei ist grundsätzlich das untere Ende des Faltenbalges 3 mittels einer Vergußmasse 4 (Gießharz, z.B. PUR) an dem unteren Abschlußteil 9 des Patronenkörpers 1 fixiert und abgedichtet, während andererseits das obere Ende des Faltenbalges 3 in entsprechender Weise in dem oberen Abschlußteil 8 des Patronenkörpers 1 mittels einer solchen Vergußmasse 5 fixiert und abgedichtet ist.

Im übrigen dient das obere Abschlußteil 8 zur Befestigung der kompletten Filterpatrone 20 an einem (nicht dargestellten) Montage-Boden.

Die Filterpatrone 20 wird von außen nach innen durchströmt, d.h. die Rohgasseite befindet sich außerhalb der Filterpatrone 20, während der Reingasraum über die obere Auslaßöffnung 6 mit dem Inneren der Filterpatrone 20 in Verbindung steht.

Wie bereits oben erwähnt, wird das Filtermedium der Filterpatrone 20 durch einen plissierten Faltenbalg 3 gebildet, dessen prinzipielle Gestaltung aus Fig. 4 ersichtlich ist. Die einzelnen Falten des Faltenbalges 3 weisen jeweils zwei einander zugeordnete Schenkel 3' und 3'' auf. Im Grundzustand verlaufen diese Falten über die Gesamthöhe des zylindrischen Faltenbalges 3.

Bei der vorliegenden Ausführungsform der Filterpatrone 20 ist nun vorgesehen, daß die Falten des Faltenbalges 3 in der Nähe des Bodens des Patronenkörpers 1 in einer solchen Weise dicht geschlossen sind, daß sich von dem Mantel des Faltenbalges 3 radial nach außen abstehende Stege 11 bilden (vgl. Fig. 1 und 2), welche gleichsam in der Form eines Stege-Kranzes 12 einen axialen Teilabschnitt 13 des in dem vorliegenden Ausführungsbeispiel im wesentlichen konisch ausgebildeten unteren Abschlußteiles 9 des Patronenkörpers 1 umgeben. Wie Fig. 1 zeigt, ist das untere Abschlußteil 9 aus noch weiter unten zu erläuternden Gründen im wesentlichen kegelförmig ausgebildet, wobei es sich in einer von dem Patronenkörper 1 weg, d.h. nach unten gerichteten Richtung verjüngt.

Anstelle einer derartigen kegelförmigen oder zumindest teilweise kegelförmigen Gestalt des unteren Abschlußteiles 9 könnte auch vorgesehen sein, daß - wie dies in den Zeichnungen nicht dargestellt ist - das untere Abschlußteil 9 in der Form eines runden Zentralkörpers ausgebildet ist, der die untere Öffnung des Patronenkörpers 1 ausfüllt, so daß im Falle einer derartigen Ausführungsform das untere Abschlußteil 9 vollständig von dem Stege-Kranz 12 des Faltenbalges 3 umgeben ist. Um die radial nach außen abstehenden Stege 11 im unteren Bereich des Faltenbalges 3 zu bilden, werden jeweils zwei einander zugeordnete Schenkel 3' und 3'' der Falten des Faltenbalges 3 (vgl. Fig. 3 und 4) miteinander fest verbunden, beispielsweise miteinander verklebt oder verschweißt. Aufgrund dieser Ausgestaltung umgeben sodann diese Stege 11 das untere Abschlußteil 9 oder zumindest den axialen Teilabschnitt 13 dieses Abschluß-Teiles 9 kranzförmig, d.h. in der Form des bereits oben erwähnten Stege-Kranzes 12, wie dies insbesondere Fig. 2 zeigt. Wie auch immer das untere Abschlußteil 9 des Patronenkörpers 1 ausgebildet ist, d.h. entweder in Form eines runden Zentralkörpers oder in Form eines kegelförmig ausgebildeten Körpers, wie dies Fig. 1 zeigt, der Faltenbalg ist im Bereich seines Stege-Kranzes 12 mittels Vergußmasse 4 an dem Patronenkörper 1 fixiert und abgedichtet. Ein solches Abdichten des unteren Endes des Faltenbalges 3 wird in der Praxis beispielsweise so ausgeführt, daß in den Patronenkörper 1 zunächst ein zylindrischer Hilfskörper eingeführt wird, welcher einen etwas kleineren Durchmesser als der Außendurchmesser des kegelförmigen unteren Abschlußteiles 9 besitzt. Dieser zylindrische Hilfskörper wird so weit in den Patronenkörper 1 eingeführt, bis er auf der Innenoberfläche des kegelförmigen unteren Abschlußteiles 9 aufliegt. Dadurch dichtet der zylindrische Hilfskörper zu dem unteren Abschlußteil hin in ausreichendem Maße ab und verhindert, daß die anschließend einzuführende Vergußmasse auf der Innenseite des kegelförmigen unteren Abschlußteiles 9 nach unten fließen kann. Nunmehr kann der Zwischenraum zwischen dem zylindrischen Hilfskörper und dem unteren Ende des Faltenbalges 3 mit der Vergußmasse 4 ausgefüllt werden. Sobald diese Vergußmasse ausgehärtet ist, kann der zylindrische Hilfskörper wieder nach oben aus dem Patronenkörper 1 herausgezogen werden. Auf diese Art und Weise wird erreicht, daß das untere Ende des Faltenbalges 3 im Bereich seines Stege-Kranzes 12 gasdicht mit dem Patronenkörper 1 verbunden ist.

Unter Bezugnahme auf Fig. 1 wird noch erläutert, daß das Stutzgitter 2 einen kleineren Durchmesser aufweist als der axiale Teilabschnitt 13 des unteren Abschlußteiles 9 des Patronenkörpers 1. Ein unterer Endabschnitt des Stützgitters 2 ist in dem Bereich des Innenumfanges des unteren Abschlußteiles 9, im vorliegenden Falle im Bereich des Innenumfanges des axialen Teilabschnittes 13 des Abschlußteiles 9, mit diesem mit Hilfe von zweckmäßigen Befestigungselementen 15, beispielsweise mittels Nieten oder dergleichen, fest verbunden. Anstelle einer Befestigung mittels Nieten kann auch eine Befestigung mittels Verschweißen vorgesehen sein. Auf jeden Fall befindet sich der resultierende Verbindungsbereich innerhalb der Vergußmasse 4, die insgesamt auch eine mechanische Verbindung zwischen dem Stützgitter 2 und dem unteren Ende des Faltenbalges 3 bildet.

Abweichend von der wie oben geschilderten Ausführungsform kann aber auch vorgesehen sein, daß lediglich das obere Ende des Faltenbalges 3 in dem zugeordneten oberen Abschlußteil 8 des Patronenkörpers 1 mittels der Vergußmasse 5 mechanisch fest vergossen wird, während das untere Ende des Faltenbalges 3 mit Hilfe der Vergußmasse lediglich an dem Patronenkörper 1 fixiert und abgedichtet wird. Diese Art der Verbindung zwischen dem Faltenbalg 3 und dem Patronenkörper 1 ermöglicht eine einfachere Trennung der beiden Komponenten, d.h. in dem Falle, daß das Filtermaterial des Faltenbalges 3 nach Maßgabe der für den jeweiligen Staub relevanten Auflagen entsorgt wird, während der Patronenkörper 1 selbst gereinigt und wiederverwendet werden kann.

Der Grund, warum das Filtermaterial unten leichter von der Patrone zu lösen ist als oben, liegt darin, daß die Vergußmasse unten z.B. ca. 1 - 2 mm hoch steht und der Kleber nur an die Oberfläche des Materials gedrückt wird. Oben sind es z.B. 6 - 7 mm Vergußmasse und die Vergußmasse kann sich im Gegensatz zu unten um jede Seite jeder Falte legen, d.h. sie läuft in Falten hinein und hat somit mehr Kontaktfläche. In der Praxis könnte z.B. so vorgegangen werden, daß das Filtermaterial der Länge nach mit einem Messer aufgeschlitzt wird. Oben wird das Material dann mit dem Messer vom Patronenkörper weggerissen. Unten löst es sich dabei von selbst. Der am oberen Rand verbliebene Rest wird durch Erwärmung vom Patronenkörper gelöst.

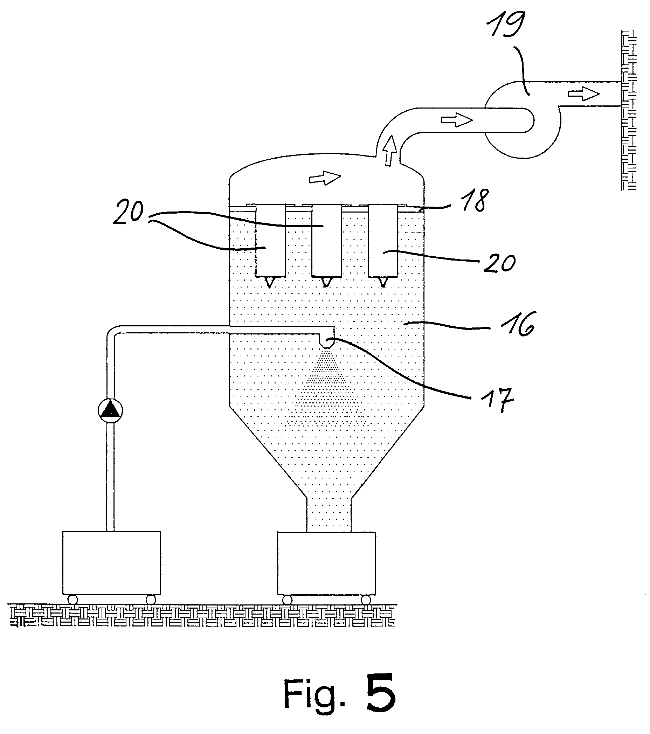

Demgegenüber ist im Falle der vorliegenden Ausführungsform der Filterpatronen vorgesehen, daß diese jeweils insgesamt von Zeit zu Zeit mittels einer entsprechenden Reinigungsflüssigkeit abgereinigt werden, wobei ein derartiges Abreinigen oder Waschen innerhalb der entsprechenden Filteranlage ausgeführt werden soll, d.h. bei eingebautem Zustand der Filterpatronen 20 (vgl. auch Fig. 5).

Zum Zwecke eines derartigen Abreinigens oder Waschens wird die Reinigungsflüssigkeit durch entsprechende Düsen 7 (vgl. Fig. 1) im oberen Bereich jeweils eines Patronenkörpers 1 zugeführt, derart, daß dessen gesamter Umfang von dem anhaftenden Staub gereinigt wird. Das zugeführte Waschwasser fließt somit entlang den Oberflächen der Falten des Faltenbalges 3 in Richtung von dem oberen Abschlußteil 8 zu dem unteren Abschlußteil 9, wobei aufgrund der wie oben beschriebenen Ausführungsweise des Faltenbalges 3 gewährleistet ist, daß auch insbesondere der im Bereich des unteren Stege-Kranzes 12 des Faltenbalges 3 anhaftende Reststaub mit Hilfe der auf der Oberfläche des Faltenbalges 3 nach abwärts fließenden Reinigungsflüssigkeit vollständig entfernt wird. Aufgrund der kegelförmigen Gestalt des unteren Abschlußteiles 9 ist ferner sichergestellt, daß die Reinigungsflüssigkeit auf der äußeren Kegeloberfläche des unteren Abschlußteiles 9 abwärts fließen und diese Oberfläche somit gut reinigen kann.

Bei der Konstruktion des kegelförmigen unteren Abschlußteiles 9 wird darauf geachtet, daß dessen Kegelwinkel so gewählt wird, daß die Reinigungsflüssigkeit sich nicht von der Kegeloberfläche ablösen und abtropfen kann, bevor sie ihre Reinigungsaufgabe erfüllt und die untere Kegelspitze des unteren Abschlußteiles 9 erreicht hat.

Wie aus Fig. 1 ersichtlich, ist ferner vorgesehen, daß im Bereich der Kegelspitze des unteren Abschlußteiles 9 ein Ventil 10 angeordnet ist. Mit Hilfe eines derartigen Ventils 10 ist es ermöglicht, daß die durch das Filtermedium des Faltenbalges 3 in das Innere des Patronenkörpers 1 während des Waschvorganges eingedrungene Waschflüssigkeit wieder nach unten ablaufen kann.

Dieses Ventil 10 wird zweckmäßigerweise so gewählt, daß es auf Staub unempfindlich reagiert, daß es im Falle von Unterdruck in der Filterpatrone 20 (Filtration) geschlossen ist und daß es ferner bei Überdruck in der Filterpatrone (Abreinigungsimpuls, Wassersäule) öffnet. Darüber hinaus wird dafür Sorge getragen, daß auch dieses Ventil 10 den im Betrieb der Filterpatrone auftretenden thermischen und chemischen Belastungen standhält.

Ein Verwendungsbeispiel für die im vorangehenden geschilderten Filterpatronen ist in der Fig. 5 dargestellt. Fig. 5 zeigt schematisch einen Wirbelschichtgranulator, in dem sich beispielsweise Tabletten befinden, die durch einen von unten in einen Behälter 16 eingeführten Luftstrom (nicht dargestellt) aufgewirbelt werden. In der Mitte des Behälters 16 befindet sich ein Sprüharm 17 für Zuckerlösungen, mit dem die im Behälter 16 aufgewirbelten Tabletten gleichmäßig mit einer Zuckerschicht bedeckt werden.

Der Behälter 16 ist nach oben hin durch eine Montageplatte 18 abgeschlossen, in welcher eine Anzahl von Filterpatronen 20 eingesetzt ist. Die Luft durchströmt die Filterpatronen 20 von außen nach innen und wird dann über den Kopf des Behälters 16 mit Hilfe eines Sauggebläses 19 abzogen.

Der durch Abrieb anfallende Tablettenstaub sammelt sich an der Außenfläche des Filtermediums der Filterpatronen 20 und fällt beim Abreinigen nach unten, wo er gesammelt und gegebenenfalls einer Weiterverwendung zugeführt wird.

Da trotz der komplexen Geometrie der Filterpatronen 20 aufgrund des Abreinigens, insbesondere des Waschens, keinerlei Reststäube auf den Patronenoberflächen verbleiben, können ohne Auswechseln dieser Filterpatronen 20 mehrere Chargen unterschiedlicher Tabletten hintereinander behandelt werden.

Die wie oben beschriebene Anwendung ist lediglich ein Beispiel, die Filterpatronen 20 können selbstverständlich in allen anderen Entstaubungsanlagen gleichermaßen eingesetzt werden, allerdings ist der Einsatz dort besonders vorteilhaft, wo es auf absolute Reinheit ankommt, d.h. vor allem in der Pharma- und Lebensmittel-Industrie.

## Patentansprüche

1. Filterpatrone (20) zur Staubabscheidung mit einem Patronenkörper (1), der aus einem Stützgitter (2), einem unteren geschlossenen Abschlußteil (9) und einem oberen Abschlußteil (8) mit einer zentralen Auslaßöffnung (6) besteht, und mit einem das Stützgitter (2) umgebenden Filtermedium in Form eines zylinderförmig angeordneten, plissierten Faltenbalges (3), dessen oberes und unteres Ende an den entsprechenden Abschlußteilen (8 bzw. 9) staubdicht fixiert sind, wobei die Falten des Faltenbalges (3) durch gegenseitiges festes Verbinden im Bereich des unteren Endes des Faltenbalges (3) zu einem Kranz (12) aus Stegen (11) geformt sind, die von dem Mantel des Faltenbalges (3) radial nach außen abstehen, und wobei zur Bildung der Stege (11) je zwei einander zugeordnete Schenkel (3', 3'') der Falten des Faltenbalges (3) miteinander verbunden sind, **dadurch gekennzeichnet**, daß das untere Abschlußteil (9) in einer axialen Richtung vom unteren Endbereich des Patronenkörpers (1) ausgehend zumindest teilweise kegelförmig und in einer von dem Patronenkörper (1) weg gerichteten Richtung sich verjüngend ausgebildet ist und daß der Kranz (12) das untere kegelförmige Abschlußteil (9) oder zumindest einen vorgegebenen axialen Teilabschnitt (13) des unteren kegelförmigen Abschlußteils (9) umgibt.

2. Filterpatrone nach Anspruch 1, **dadurch gekennzeichnet**, daß das untere Ende des Faltenbalges (3) im Bereich des Kranzes (12) mittels Vergußmasse am Patronenkörper (1) fixiert und abgedichtet ist.

3. Filterpatrone nach Anspruch 2, **dadurch gekennzeichnet**, daß das untere Ende des Faltenbalges (3) zumindest gegenüber dem vorgegebenen axialen Teilabschnitt (13) des unteren Abschlußteils (9) fixiert und abgedichtet ist.

4. Filterpatrone nach einem der Ansprüche 1 bis 3, **dadurch gekennzeichnet**, daß im Bereich einer Kegelspitze des unteren Abschlußteils (9) ein Ventil (10) angeordnet ist.

5. Filterpatrone nach einem der Ansprüche 1 bis 4, **dadurch gekennzeichnet**, daß das obere Ende des Faltenbalges (3) in dem oberen Abschlußteil (8) mittels Vergußmasse fixiert und abgedichtet ist.

6. Filterpatrone nach einem der Ansprüche 2 bis 5, **dadurch gekennzeichnet**, daß das Stützgitter (2) einen Durchmesser aufweist, der kleiner als der Durchmesser des vorgegebenen axialen Teilabschnitts (13) des unteren Abschlußteils (9) ist und im Bereich des Innenumfangs des unteren Abschlußteils (9) mit diesem fest verbunden, insbesondere vernietet oder verschweißt ist, wobei dieser Verbindungsbereich innerhalb der Vergußmasse (4) liegt, die gleichzeitig eine mechanische Verbindung zwischen dem Stützgitter (2) und dem unteren Ende des Faltenbalges (3) im Bereich des Kranzes (12) bildet.

## Claims

1. A filter cartridge (20) for dust separation with a cartridge body (1) consisting of a support grid (2), a lower closed end part (9) and an upper end part (8) with a central outlet port (6), and with a filter medium surrounding the support grid (2) in the form of a cylindrically disposed, pleated accordion bellows (3) whose upper and lower ends are fixed in dustproof fashion on the corresponding end parts (8 or 9), the folds of the accordion bellows (3) being formed by mutual firm connection in the area of the lower end of the accordion bellows (3) into a ring (12) of bars (11) which protrude radially outward from the jacket of the accordion bellows (3), and the bars (11) each being formed by interconnection of two mutually associated legs (3', 3'') of the folds of the accordion bellows (3), characterized in that the lower end part (9) is of at least partly conical design in an axial direction starting out from the lower end area of the cartridge body (1), tapering in a direction pointing away from the cartridge body (1), and the ring (12) surrounds the lower conical end part (9) or at least a given axial portion (13) of the lower conical end part (9).

2. The filter cartridge of claim 1, characterized in that the lower end of the accordion bellows (3) is fixed and sealed on the cartridge body (1) in the area of the ring (12) by means of casting compound.

3. The filter cartridge of claim 2, characterized in that the lower end of the accordion bellows (3) is fixed and sealed at least with respect to the given axial portion (13) of the lower end part (9).

4. The filter cartridge of any of claims 1 to 3, characterized in that a valve (10) is disposed in the area of an apex of the conical lower end part (9).

5. The filter cartridge of any of claims 1 to 4, characterized in that the upper end of the accordion bellows (3) is fixed and sealed in the upper end part (8) by means of casting compound.

6. The filter cartridge of any of claims 2 to 5, characterized in that the support grid (2) has a diameter which is smaller than the diameter of the given axial portion (13) of the lower end part (9) and is firmly connected, in particular riveted or welded, with lower end part (9) in the area of the inner circumference thereof, this connecting area being located within the casting compound (4) which simultaneously forms a mechanical connection between the support grid (2) and the lower end of the accordion bellows (3) in the area of the ring (12).

## Revendications

1. Cartouche filtrante (20) pour la séparation de poussière, comprenant un corps de cartouche (1) qui se compose d'une grille d'appui (2), d'une partie inférieure d'extrémité fermée (9) et d'une partie supérieure d'extrémité (8) qui comporte un orifice central de sortie (6), et qui comprend un milieu filtrant entourant la grille d'appui (2) et ayant la forme d'un soufflet plissé cylindrique (3) dont l'extrémité supérieure et l'extrémité inférieure sont fixées de manière hermétique à la poussière aux parties correspondantes d'extrémité (8 ainsi que 9), les plis du soufflet (3) étant conformés, par réunion mutuelle fixe dans la région de l'extrémité inférieure du soufflet (3), en une couronne (12) de nervures (11) qui débordent radialement vers l'extérieur de l'enveloppe du soufflet (3) et deux branches associées l'une à l'autre (3', 3'') des plis du soufflet (3) étant reliées l'une à l'autre pour la formation des nervures (11), caractérisée en ce que la partie inférieure d'extrémité (9) est conformée dans une direction axiale, à partir de la zone extrême inférieure du corps de cartouche (1), au moins partiellement en cône et de manière à se rétrécir dans un sens s'éloignant du corps de la cartouche (1) et en ce que la couronne (12) entoure la partie conique d'extrémité (9) ou au moins un segment axial prescrit (13) de la partie inférieure conique d'extrémité (9).

2. Cartouche filtrante selon la revendication 1, caractérisée en ce que l'extrémité inférieure du soufflet (3) est fixée au corps de la cartouche (1) et rendue étanche dans la zone de la couronne (12) au moyen d'une masse de scellement.

3. Cartouche filtrante selon la revendication 2, caractérisée en ce que l'extrémité inférieure du soufflet (3) est fixée et rendue hermétique au moins par rapport au segment axial prescrit (13) de la partie inférieure d'extrémité (9).

4. Cartouche filtrante selon l'une des revendications 1 à 3, caractérisée en ce qu'une soupape (10) est disposée dans la région d'une pointe du cône de la partie d'extrémité inférieure.

5. Cartouche filtrante selon l'une des revendications 1 à 4, caractérisée en ce que l'extrémité supérieure du soufflet (3) est fixée à la partie d'extrémité supérieure (8) et rendue hermétique au moyen d'une masse de scellement.

6. Cartouche filtrante selon l'une des revendications 2 à 5, caractérisée en ce que la grille d'appui (2) a un diamètre qui est inférieur au diamètre du segment axial prescrit (13) de la partie d'extrémité inférieure (9) et est assujettie à la partie d'extrémité inférieure (9), dans la région de la circonférence intérieure de cette dernière, en particulier par rivetage ou soudage, cette zone d'assemblage étant située à l'intérieur de la masse de scellement (4) qui forme également un lien mécanique entre la grille d'appui (2) et l'extrémité inférieure du soufflet (3) dans la région de la couronne (12).
